# EUROPEAN PATENT SPECIFICATION

(11) **EP 0 784 595 B1**
(45) Date of publication and mention of the grant of the patent: **13.05.1998**
(21) Application number: 96926569.3
(22) Date of filing: 02.08.1996
(51) Int. Cl.: C01C 1/02

(54) **PROCESS FOR REMOVING OXYGEN FROM AMMONIA AT ROOM TEMPERATURE**
VERFAHREN ZUR ENTFERNUNG VON SAUERSTOFF AUS AMMONIAK AUF RAUMTEMPERATUR
PROCEDE PERMETTANT D'EXTRAIRE DE L'OXYGENE DE GAZ AMMONIAC A TEMPERATURE AMBIANTE

(30) Priority: 07.08.1995 IT MI951756
(43) Date of publication of application: 23.07.1997
(73) Proprietor: SAES GETTERS S.p.A., 20020 Lainate (Milano) (IT)
(72) Inventor: VERGANI, Giorgio, I-20052 Monza (IT); SUCCI, Marco, I-20131 Milano (IT); SOLCIA, Carolina, I-20145 Milano (IT)
(74) Representative: Adorno, Silvano
(86) International application number: PCT/IT96/00158
(87) International publication number: WO 97/06104

(56) References cited:
- EP-A- 0 240 270
- EP-A- 0 365 490
- EP-A- 0 484 301
- WO-A-94/25395
- US-A- 4 586 561

## Description

The present invention relates to a process for removing oxygen from ammonia at room temperature.

Ammonia (NH₃) is a gas widely used in the semiconductor industry for the formation of nitride layers in solid-state electronic devices, in particular through the CVD (Chemical Vapor Deposition) and epitaxy processes.

It is well known in the art that the number of defects found in the electronic devices (and consequently of discarded devices) increases with the increase in the level of impurities in the process gas, though precise quantitative relationships are not available on this matter. A particularly noxious species in this respect is oxygen (O₂), due to its high reactivity.

Patent EP-B-484301, in the name of the Applicant, discloses a process for purifying a flow of ammonia from various gases, among which oxygen. This process consists in contacting the ammonia flow to be purified with a getter alloy having the composition Zr-V-Fe; the preferred getter alloy is the alloy having the weight percentage composition Zr 70% - V 24,6% - Fe 5,4%, manufactured and sold by the Applicant under the name St 707. This process is effective for purifying ammonia, but has some drawbacks caused by the working temperature of the purifier. In fact, the getter alloy requires a working temperature between 100 and 150°C for its correct working. However, the materials which make up the purifier, at these temperatures, can decompose ammonia. Moreover, in case the oxygen content in ammonia is high, the St 707 alloy can overheat due to oxygen absorption, which is fast at these temperatures, thus triggering an autocatalytic reaction which, through the production of high amounts of heat, can lead in a short time to the distruction of the purifier, also taking into account the fact that ammonia is a flammable and potentially explosive gas. Finally, the possibility of operating at room temperature is generally preferred in the industry because it simplifies the processes and the relevant production lines.

The object of the present invention is to provide a process for removing oxygen from ammonia at room temperature.

This and other objects are achieved through the process of the present invention, consisting in contacting at room temperature a flow of ammonia to be purified with a getter material made up of a mixture of metallic iron and manganese with a weight ratio varying between about 7:1 and 1:1 and having a specific surface higher than about 100 square meters per gram (m²/g).

The invention is illustrated hereunder with reference to the figures, wherein:
FIGURE 1 shows a possible embodiment of a purifier by which the process of the invention can be carried out; and
FIGURE 2 shows a possible alternative embodiment of an ammonia purifier according to the invention.

The getter material of the invention is made up of a mixture of iron and manganese in form of elements. The weight ratio between iron and manganese can vary between about 7:1 and 1:1. It has been found that the efficiency in oxygen absorption by the getter material decreases significantly beyond said limits. As previously said, the getter material must have a high specific surface, greater than 100 m²/g. This condition of high specific surface can be achieved by using finely divided metal powders. However, the metals are preferably used in a supported form by depositing them on inert substrates of high specific surface, for example molecular sieves such as zeolites, porous alumina, porous silica, or other similar materials known in the art.

The formation of the metal layer on the substrate is generally achieved through techniques of coprecipitation from a solution wherein soluble compounds of iron and manganese, generally indicated hereafter as precursors, have been dissolved. In this way, a first layer is obtained which is made up of compounds of the metals, generally oxides or hydroxides or more generally intermediate species of the oxo-hydroxide type; this product, made up of oxo-hydroxides of the metals on the substrate, is defined hereafter as an intermediate. The oxo-hydroxides are then thermally decomposed thus obtaining the metals in the form of elements. The starting solvent and precursors can be selected among a wide range of possibilities, obviously with the only restraint that the precursors be soluble in the selected solvent. For example, organic solvents can be used, such as alcohols or esters, with precursors wherein the metals are complexed with an organic binder: in this case, metal complexes with acetylacetone are typically used. However, an acqueous solution is preferably employed. In this case, the used precursors are soluble salts of the metals, such as for example chlorides, nitrates or acetates. The precipitation of the compounds which make up the first layer on the substrate material is generally carried out by varying the acidity conditions of the solution, in particular by decreasing the acidity, i.e. by increasing the pH of the solution. Once the intermediate product has been obtained, the solution is centrifuged or filtered and the wet powders are first dried and then treated at high temperature for the conversion of the iron and manganese compounds into metals. The reduction of the oxo-hydroxides to the metallic form takes place through a two-step heat treatment, wherein in the first step a flow of hydrogen is passed on the intermediate product at a temperature higher than 300°C for at least 4 hours; in the second step, which immediately follows the first one, a flow of purified argon is passed on the reduced intermediate product at a temperature higher than 300°C for at least 4 hours. Reference is made to the examples for a more detailed description of the preparation of the getter material. A material similar to that of the invention, having a weight ratio between iron and manganese of about 1.8, is marketed by the Japanese company Nissan Girdler Catalyst Co. Ltd. for the purification of inert gases such as helium, argon or nitrogen.

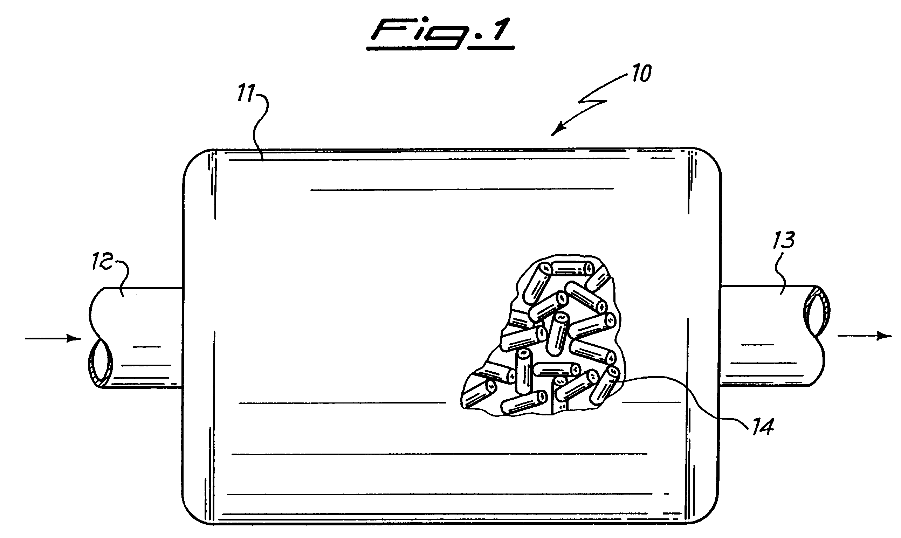

The purification of ammonia from oxygen takes place by passing the contaminated ammonia at room temperature over a bed of the above-described getter material. The getter material is generally contained in a chamber which forms the body of a purifier, provided at the two opposite ends with passages for the inlet and outlet of ammonia. The purifier body may be made in various shapes. The preferred shape, illustrated in fig.1, is the cylindrical shape. In this case, the purifier 10 is made up of a main body 11 with a gas inlet 12 and outlet 13 on the two opposite bases of the body and coaxial therewith. The getter material 14 is contained inside body 11. The gas inlet 12 and outlet 13 are preferably provided with standard connections of the VCR type known in the art (not shown in the figure) for connecting the gas lines upstream and downstream from the purifier.

The purifier body may be made with various metallic materials; the preferred material for this use is AISI 316 steel. The inner surfaces of the purifier body, which come in contact with the gas, are preferably electro-finished so as to achieve a surface roughness lower than about 0,5 µm. In order to prevent that traces of getter material powder are carried away by the ammonia flow leaving the purifier, the getter material can be used in the form of pellets obtained by compressing the powders, as shown in fig.1, or it may be retained, inside the purifier body, by generally metallic gauzes or porous diaphragms which allow an easy access of the gas to the getter material.

The flow of ammonia to be purified is preferably contacted with a drying material in order to remove humidity; in fact, ammonia always includes traces of water, which is a very reactive gas and therefore noxious for the semiconductor industry. Chemical humidity absorbers can be used as drying material, such as for example barium oxide, calcium oxide or strontium oxide, or physical absorbers, such as for example 3Å zeolites (i.e. zeolites having a crystal lattice with 3 Ångstrom cavities). The drying material may be introduced into the purifier body, mixed to the getter material of the invention or separate therefrom; in this latter case, the drier can be placed upstream or downstream from the getter material in the direction of the ammonia flow.

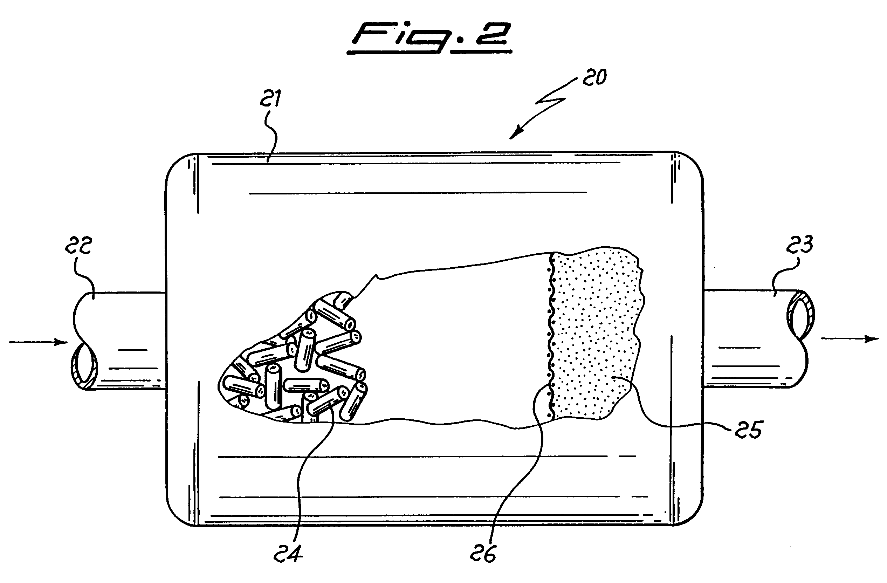

A purifier with drier downstream from the getter material is illustrated in fig.2, which shows a section of purifier 20, made up of a body 21, a gas inlet 22 and a gas outlet 23, as in purifier 10. Inside purifier 20, the getter material 24 is located on the side of inlet 22 and the drying material 25 on the side of outlet 23.; a mechanical member 26 easily permeable to gases, such as a wire gauze, is preferably positioned between the two materials so as to help in maintaining the separation and the original geometrical arrangement of the materials. Another possibility is to arrange the getter material of the invention and the drying material in two independent housings; for example, the housing of the drying material may be of the same shape of the purifier containing the getter material. The following examples are given for merely illustrative purpose, and they are not intended to limit in any way the scope of the invention.

### EXAMPLE 1

This example relates to the preparation of the getter material of the invention.

96.0 grams of ferric chloride hexahydrate, FeCl₃·6H₂O, and 41.7 grams of manganese chloride tetrahydrate, MnCl₂·4H₂O, are dissolved in 500 cc of distilled water. The solution is shaken and heated to about 50°C so as to favour the solubilization of the salts. The volume of the solution is then made to 1 liter, while increasing the temperature to 60°C. 7.5 grams of previously ground M.S. 13X zeolites commercially available from the GRACE company, are added to this solution while stirring for about 5 minutes. The temperature is then lowered to 40°C and concentrated ammonia is added thus adjusting the pH of the solution to 7.5. A precipitate made up of iron and manganese hydroxides is obtained. The solution is heated at 60°C for about 5 minutes to facilitate the precipitation. The solution is cooled down to 30°C and adjusted to pH 9 with concentrated ammonia. After 5 minutes, the solution is centrifuged and the precipitate is repeatedly washed with an acqueous solution at pH 8 at a temperature of about 50°C. 4 grams of amorphous silica, which improves the mechanical consistency of the material, are added to the obtained precipitate, while stirring until a homogeneous mixture is obtained which is heated to 75°C for 24 hours so as to dry the precipitate. The precipitate is finally calcined at 700°C for 4 hours to convert the iron and manganese hydroxides into the corresponding oxides. 22 grams of the thus obtained material are loaded into the steel body of a purifier as shown in fig.2. The body is connected to a gas line through the inlet and outlet connections. Valves for shutting off the gas flow are located upstream and downstream from the purifier. The shut-off valves are opened and hydrogen at room temperature is flowed into the purifier. In the meanwhile, the heating of the purifier body from room temperature to 400°C, by means of a suitable heating sleeve, is started; the temperature is measured, through a thermocouple, on the outer wall of the purifier body. Hydrogen is flowed for 4 hours since the moment at which the temperature read by the thermocouple reaches 400°C. After this period, the hydrogen flow is interrupted and high-purity argon is flowed in the purifier for 4 hours, while keeping the temperature at 400°C. The heating is stopped after 4 hours, and the purifier cools down while the argon keeps flowing. When the purifier has reached the room temperature, the argon flow is interrupted and the purifier is isolated by closing the shut-off valves. At the end of this procedure, the getter material made up of supported iron and manganese is present inside the purifier body.

### EXAMPLE 2

This example shows the operation of the purifier of the invention. The test is carried out in an indirect way, by verifying the capability of the purifier to remove oxygen without producing hydrogen in a nitrogen flow after having conditioned the getter material in ammonia for 10 days; this because reliable instruments for measuring the concentration of oxygen in ammonia are not presently available.

The purifier of example 1, containing 23 grams of getter material, is conditioned in ammonia through a room temperature treatment in four steps: in the first step, gaseous ammonia is flowed in the purifier at 0.1 liters per minute (l/min) at a pressure of 2.2 bars for 4 hours; in the second step, the purifier is isolated in ammonia at 2.2 bars for 10 days; in the third step, ammonia is flowed again in the purifier at 0.1 l/min at 2.2 bars for one hour; in the fourth and last step, 0.3 l/min of pure argon are flowed in the purifier at 2 bars for half an hour. At the end of these treatments, the amount of hydrogen leaving the purifier is measured through a Trace Analytical RGA3 analyzer by flowing pure nitrogen in the purifier. The measured concentration of hydrogen is lower than the sensitivity limit of the instrument, thus indicating that the catalyst conditioned as described does not dissociate ammonia. A nitrogen flow containing 100 parts per million (ppm) of oxygen, at a flow rate of 0.1 l/min at room temperature and at 3 bars pressure, is flowed on the conditioned purifier. The outcoming gas is analyzed to verify the oxygen concentration by an Osaka MK3Y analyzer. The criterion established to consider the purifier as operating is that the oxygen concentration in the outcoming gas flow must not be higher than 1% based on the oxygen concentration entering the purifier; in this case, the outcoming oxygen concentration above which the purifier is considered exhausted is 1 ppm. This level was reached after 7 days of test. From the total volume of the gaseous mixture flowed in the purifier and from the knowledge of the incoming oxygen concentration, it is possible to calculate an absorption capacity of the getter material of the invention of about 4 liters of oxygen for each liter of bed material (l/l), which is a much better value than the 1-2 l/l achieved by prior art purifiers.

## Claims

1. A process for removing oxygen from ammonia at room temperature consisting in contacting the flow of ammonia to be purified with a getter material, characterized in that said getter material is made up of a mixture of metallic iron and manganese with a weight ratio varying between about 7:1 and 1:1 and has a specific surface greater than about 100 m²/g.

2. A process according to claim 1, wherein iron and manganese are present in a supported form on a material selected among zeolites, porous alumina, porous silica and other molecular sieves.

3. A process according to claim 1, wherein the weight ratio between iron and manganese is 5:1.

4. A process according to claim 1, wherein ammonia is contacted, in addition to the getter material, with a drying material selected among barium oxide, calcium oxide, strontium oxide and 3Å zeolites.

5. A process according to claim 4, wherein the getter material and the drying material are mixed inside the purifier body.

6. A process according to claim 4, wherein the getter material and the drying material are separately present inside the purifier body.

7. A process according to claim 4, wherein the ammonia flow meets the getter material before meeting the drying material.

## Patentansprüche

1. Verfahren zum Entfernen von Sauerstoff aus Ammoniak bei Raumtemperatur, bestehend aus Inkontaktbringen des zu reinigenden Ammoniakstroms mit einem Gettermaterial, **dadurch gekennzeichnet,** daß das Gettermaterial aus einer Mischung von metallischem Eisen und Mangan mit einem Gewichtsverhältnis zwischen etwa 7:1 und 1:1 besteht und eine spezifische Oberfläche von mehr als 100 m²/g besitzt.

2. Verfahren nach Anspruch 1, worin Eisen und Mangan auf einem Träger eines Materials ausgewählt aus Zeolithen, porösem Aluminat, porösem Silicat und anderen Molekularsieben ist.

3. Verfahren nach Anspruch 1, worin das Gewichtsverhältnis zwischen Eisen und Mangan 5:1 ist.

4. Verfahren nach Anspruch 1, worin Ammoniak zusätzlich zum Gettermaterial mit einem Trockenmittel ausgewählt aus Bariumoxid, Calciumoxid, Strontiumoxid und 3Å Zeolithen in Kontakt gebracht wird.

5. Verfahren nach Anspruch 4, worin das Gettermaterial und das Trockenmittel in der Reinigungskammer vermischt werden.

6. Verfahren nach Anspruch 4, worin das Gettermaterial und das Trockenmittel getrennt voneinander in der Reinigungskammer vorliegen.

7. Verfahren nach Anspruch 4, worin der Ammoniakstrom auf das Gettermaterial trifft, bevor er auf das Trockenmittel stößt.

## Revendications

1. Un procédé permettant d'extraire de l'oxygène de l'ammoniac à température ambiante consistant à mettre en contact l'écoulement d'ammoniac à purifier avec une matière de sorption, caractérisé en ce que ladite matière de sorption est réalisée d'un mélange de fer métallique et de manganèse métallique avec un rapport pondéral variant entre environ 7:1 et 1:1 et présente une surface spécifique supérieure à environ 100 m²/g.

2. Un procédé selon la revendication 1, dans lequel le fer et le manganèse sont présents sur un support d'une matière choisie parmi les zéolites, l'alumine poreuse, la silice poreuse et d'autres tamis moléculaires.

3. Un procédé selon la revendication 1, dans lequel le rapport pondéral entre le fer et le manganèse est de 5:1.

4. Un procédé selon la revendication 1, dans lequel l'ammoniac est mis en contact, en plus de la matière de sorption, avec une matière de séchage choisie parmi l'oxyde de baryum, l'oxyde de calcium, l'oxyde de strontium et les zéolites de 3Å.

5. Un procédé selon la revendication 4, dans lequel la matière de sorption et la matière de séchage sont mélangées à l'intérieur du corps purificateur.

6. Un procédé selon la revendication 4, dans lequel la matière de sorption et la matière de séchage sont présentes de manière séparée à l'intérieur du corps purificateur.

7. Un procédé selon la revendication 4, dans lequel l'écoulement d'ammoniac rencontre la matière de sorption avant de rencontrer la matière de séchage.
